(19) Europäisches Patentamt

European Patent Office

Office européen des brevets

(11) EP 1 038 391 B1

(12) EUROPEAN PATENT SPECIFICATION

(45) Date of publication and mention
of the grant of the patent:
23.07.2003 Bulletin 2003/30

(51) Int Cl.⁷: H04N 5/18

(86) International application number:
PCT/US98/25904

(21) Application number: 98962935.7

(22) Date of filing: 07.12.1998

(87) International publication number:
WO 99/030487 (17.06.1999 Gazette 1999/24)

(54) **CLAMP PULSE GENERATOR CONTROL**

STEUERUNG EINER KLEMMPULSERZEUGUNGSSCHALTUNG

COMMANDE DE GENERATEUR D'IMPULSIONS DE VERROUILLAGE

(84) Designated Contracting States:
DE FR GB IT

(30) Priority: 08.12.1997 US 67806 P

(43) Date of publication of application:
27.09.2000 Bulletin 2000/39

(73) Proprietor: Thomson Licensing S.A.
92648 Boulogne Cedex (FR)

(72) Inventor: LENDARO, Jeffery, Basil
Noblesville, IN 46060 (US)

(74) Representative: Rossmanith, Manfred, Dr. et al
Deutsche Thomson-Brandt GmbH
European Patent Operations
Karl-Wiechert-Allee 74
30625 Hannover (DE)

(56) References cited:
US-A- 5 140 421

• PATENT ABSTRACTS OF JAPAN vol. 5, no. 109
(E-065), 15 July 1981 & JP 56 047189 A (TOSHIBA
CORP), 28 April 1981
• PATENT ABSTRACTS OF JAPAN vol. 96, no. 11,
29 November 1996 & JP 08 191405 A (SONY
CORP), 23 July 1996
• PATENT ABSTRACTS OF JAPAN vol. 15, no. 384
(P-1258), 27 September 1991 & JP 03 154263 A
(SONY CORP), 2 July 1991

EP 1 038 391 B1

## Description

This invention relates to the field of video display technology and in particular to the provision of controlled clamping operation.

## BACKGROUND OF THE INVENTION

The convergence of video and computer technologies necessitates the use of a video or television display as a data monitor. Such a usage, often termed multi sync operation, requires for example, that horizontal or vertical synchronizing pulses having either positive or negative polarities be processed to facilitate usage by the video or television display. Such sync pulse processing is well known. In addition, the video display must enable input selection between a plurality of signal format sources, for example NTSC, DTV, VGA etc. However, such input selection capability may inadvertently result in the selection of an absent signal source. During an absence of synchronizing signals a video drive signal coupled to a cathode ray tube may assume a level which results in an excessive beam current. Such operation with excessive beam current may result in increased power supply dissipation, tube mask heating with attendant deformation, and possibly activation of X ray protection circuitry. These undesirable consequences may cause the display enter a standby mode thus necessitating a user power on command, and in extreme circumstances may even result in device failure. Thus, during an absence of video and or synchronizing signals it is desirable that a video display monitor continues to operate in a stable, non-damaging mode and maintains the capability of status indication or warning display.

Reference D1 (Patent Abstracts of Japan, Publication No. 56 047 189 A) discloses a circuit for securing stable operation against noises by providing a circuit for counting clock pulses of a local subcarrier signal for a fixed time from the trailing edge of the horizontal synchronizing signal. A local chrominance signal is input to a first input terminal of D1 and a horizontal synchronizing signal is input to a second input terminal of D1 as reset pulses. The circuit for counting counts a predetermined number of clock pulses and upon reaching a set value resets a flip flop. A flyback pulse is supplied to an input terminal of a no signal deciding circuit. The flyback signal and the pulses from the counting circuit are input to a latch along with the output of a logic circuit. The latch then sends one of the output pulses of the logic circuit or the flyback pulses to the output of D1.

Reference D2 (Patent Abstracts of Japan, Publication No. 08 191 405 A) provides a clamping pulse generator for generating a clamping pulse based upon an external sync pulse having a desired width. D2 provides a control input terminal for receipt of a control signal and a sync discriminator for determining if an external pulse is present. A pulse generator generates a clamping pulse based upon the front edge and back edge of a horizontal sync pulse output from sync separators. A clamping pulse based upon the front edge of the horizontal sync pulse is selected by a switch when an external sync pulse is present and a clamping pulse based upon the back edge of the horizontal sync pulse is selected by a switch when an external sync pulse is not present. When the control signal received by the control input terminal has a level "L", the clamping pulse based upon the back edge of the horizontal sync signal is output.

Reference D3 (U.S.P. 5,140,421) provides a video signal processing pulse producing circuit for a video display device. D3 receives a synchronizing signal included in the video signal and includes a video signal processing element responsive to a pulse of predetermined period. A generating circuit generates a pulse in response to receipt of the synchronizing signal for controlling the signal processing element. A compensation circuit generates an equivalent pulse having the predetermined period when receipt of the synchronizing signal by the pulse generating circuit is interrupted in order to maintain continuous control of the video signal processing element.

## SUMMARY OF THE INVENTION

Undesirable consequences resulting from signal absences are precluded by an inventive arrangement which allows continued operation of the monitor apparatus, maintains on screen display capability, and prevents over dissipation in the circuitry and image display device. Therefore, the invention suggests improved clamp pulse generation systems according to independent claims 1 and 4. Improvements of the invention are subject of dependent subclaims.

## BRIEF DESCRIPTION OF THE DRAWING

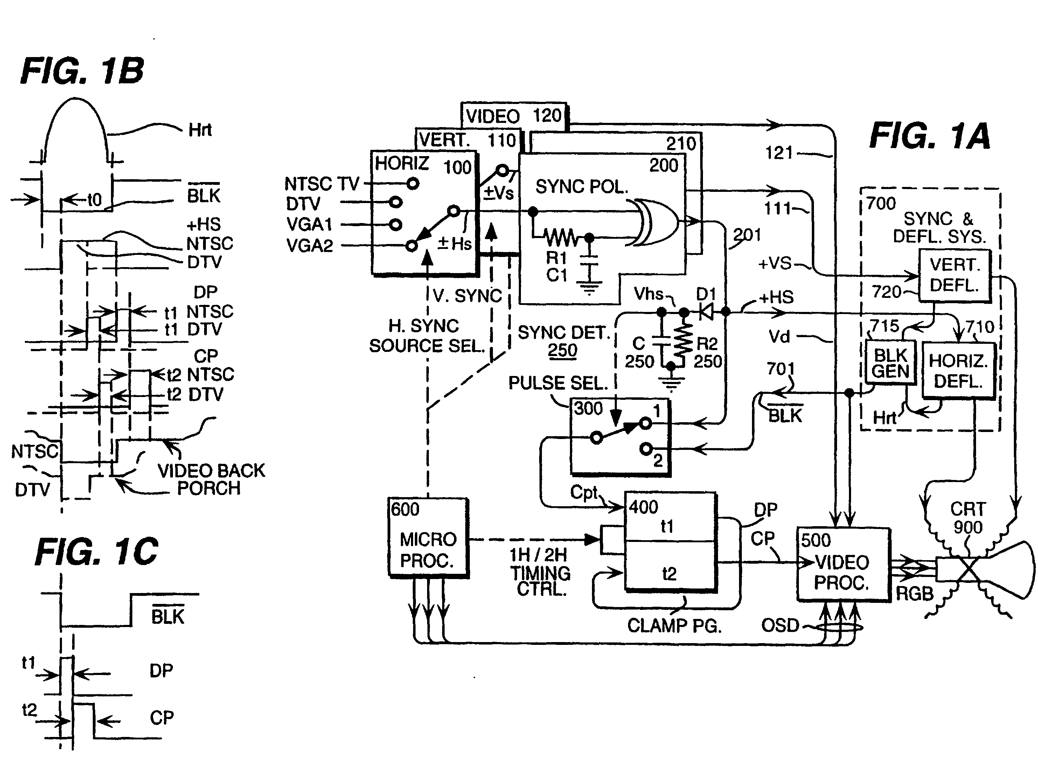

FIGURE 1A is a simplified block diagram illustrating part of a video display monitor including inventive control arrangements.

FIGURE 1B depicts pulses and timing relationships occurring during operation at NTSC and DTV deflection frequencies in the inventive arrangement of FIGURE 1A.

FIGURE 1C depicts pulses and timing relationships occurring during an absence of sync pulses in the arrangement of FIGURE 1A.

## DETAILED DESCRIPTION

A simplified block diagram of a video display monitor operable at a plurality of synchronizing signal frequencies is illustrated in FIGURE 1A. A horizontal synchronizing pulse source selector is depicted as block 100. Similar selectors exist for selection of vertical synchronizing pulses, selector 110, and video sources, selector 120. Selectors 100, 110 and 120 are controlled by a control microprocessor 600 in response to user generated control commands (not shown). Horizontal synchronizing pulses from selector 100 and vertical synchronizing pulses from selector 110 are each coupled for conversion to positive going signals. Horizontal sync signal $\pm$ Hs from selector 100 is shown coupled to a sync polarity selector 200 which, by means of integrator R1, C1 and an exclusive OR functional device, provides a positive polarity horizontal sync output signal +HS for either polarity of input signal $\pm$ Hs. Processed horizontal sync +HS, signal 201, is coupled to a synchronizing system 700 which includes horizontal deflection amplifier 710, vertical deflection amplifier 720 and a blanking generator 715. The horizontal and vertical deflection amplifiers are coupled to deflection yokes mounted on a cathode ray tube 900 for generating a scanned raster. Horizontal sync signal 201 is coupled to sync detector 250 and pulse selector 300 which determines the source from which clamp pulses CP are to be generated. Clamp pulse generator 400 includes a delay generator having a delay period of t1, which positions clamp pulse CP relative to trigger pulse Cpt. In addition, generator 400 determines the duration of clamp pulse CP. To facilitate operation at multiple horizontal frequencies differing in excess of 2 : 1 requires differing clamp pulse delay and/or duration, thus clamp pulse generator 400 is controlled by microprocessor system 600 to generate clamp pulses specific to horizontal frequencies of the selectable multiplicity.

Operation of the inventive arrangement is as follows. During the uninterrupted presence of positive polarity horizontal syncs +HS, signal 201 is coupled via diode D1 and charges capacitor C250 to a positive potential Vhs. The positive voltage Vhs is applied to a control input of an analog switch 300 which results in the selection of signal 201, horizontal sync +HS as a clamp pulse trigger signal Cpt. Clamp pulse generator 400 is triggered by a negative going edge of signal Cpt and generates a pulse DP with a duration t 1 of approximately 0.5 micro second. FIGURE 1B illustrates the relative timing of pulse generator 400 input and output signals during operation with NTSC signal with a scanning frequency of about 15.734 kHz and a high definition signal DTV with a frequency of approximately 33,670 kHz. The negative going edge of pulse DP is employed to initiate generation of clamp pulse CP with a duration t 2 of approximately 1 micro second with an NTSC signal and approximately 1/2 micro second with a DTV signal. The combined effect of delay time t1 and pulse width t2 is chosen to position clamping action within video processor 500 to occur during a back porch region of the horizontal blanking interval of each video signal. During the uninterrupted supply of horizontal sync signals, blanking signal $\overline{BLK}$ which is derived from deflection signals is not used for clamp pulse derivation. Blanking signal $\overline{BLK}$ leads signal +HS b y interval t0, approximately 0.5 micro seconds which corresponds to a horizontal phase or centering adjustment of the raster.

Although synchronizing system 700 may be designed to free run during sync. signal absences and consequently may provide an uninterrupted source for clamp pulse derivation, such use of deflection derived video clamp pulses may produce undesirable video artifacts resulting from the requirements of multiple frequency syncrhonization of system 700. For example, horizontal retrace pulses are processed to form a horizontal rate component of the blanking signal, however, since deflection retrace time is determined in general to satisfy operation at the highest input scanning frequency. Clamp pulses derived from such a retrace related signal will result in the generation of clamp pulses with different timing or positioning for the various different scanning frequency signals to be displayed. In addition the horizontal component of the blanking signal may be perturbed by horizontal retrace pulse shape changes responsive to cathode ray tube beam current. Furthermore, deflection distortion correction may also introduce retrace pulse shape modulation. Thus, such retrace pulse variations may result in undesirable clamp pulse position changes and or phase modulation relative to the video to be clamped causing the introduction of a spurious reference or black level component into the video signal. Hence, during normal operation, undesirable clamp pulse timing changes are avoided by deriving clamping pulses from the input signal source.

Clamp pulse CP is coupled to processor 500 to maintain the amplified video signals within the video processor at a predetermined potential, for example to hold a back porch region of each video signal at a specific reference potential. Failure to control the reference potential of the video drive signals within processor 500 may result in the individual RGB drive amplifiers assuming undesirable potentials which may increase device power dissipation. Such spurious RGB signal potentials resulting from the loss of clamping may cause distortion of any screen image or on screen display message to the point of rendering it unreadable. In addition to the distortion of any display image, these spurious RGB signals may result in potentially serious consequences, for example, a maximum brightness white raster may result causing phosphor burns in projection display cathode ray tubes. Furthermore this spurious peak white raster increases CRT power dissipation, with attendant increased beam current causing additional mask heating with possible mechanical deformation resulting in beam convergence errors. Thus lost or missing clamp pulses may render the display incapable of presenting warnings or status information, for example, as provided by on screen display messages. These unwanted consequences are advantageously avoided by the inventive arrangement which automatically controls the clamp pulse trigger source selection by detection of a synchronizing pulse interruption by sync detector 250.

An interruption of signal 201 terminates charging of capacitor C250 via diode D1 and allows resistor R250 to discharge the positive voltage Vhs established across the capacitor. The values of capacitor C250 and resistor R250 are selected such that voltage Vhs decays to a value lower than a switching threshold of pulse selector 300 in approximately 200 mille seconds at which time input 2 is selected. The selection of input 2 couples a deflection derived blanking signal $\overline{BLK}$ to clamp pulse generator 400. Since sync system 700 continues to generate deflection signals during sync interruption, the use of the $\overline{BLK}$ signal 701 ensures that video signals R, G, B, output from processor 500 are maintained at a predetermined potential which allows on screen message display capability. The resulting the pulse waveforms derived from the $\overline{BLK}$ signal are illustrated in FIGURE 1C which shows clamp pulse CP occurring within the width of blanking pulse signal $\overline{BLK}$.

In an alternative embodiment sync pulse absence detection and deflection derived blanking pulse selection may be achieved by use of digital signal processing. For example, a counter with decoded outputs is clocked by a suitable high frequency signal, for example a line locked clock or a color subcarrier related clock, and is enabled to count during the width of blanking pulse signal $\overline{BLK}$. Thus the counter may generate a series of decoded pulses, for example pulses 0 - 9 bracketed within the blanking pulse duration. One decoded output pulse is chosen, for example the ninth count, to be coupled as an alternate clamp pulse trigger signal Cpt during the interruption of signal 201. Horizontal sync signal 201 is applied to a reset input of the counter, thus within the blanking pulse duration counting is initiated until the counter is reset by the occurrence of signal 201, prior to the generation or decoding of the exemplary the ninth count. However, during an interruption of signal 201 the counter is not reset and the exemplary the ninth count is output for clamp pulse generation.

**Claims**

1. A clamp pulse generating system comprising:

   a selector(300) receiving an external horizontal rate pulse signal (+HS) and an internally generated deflection derived blanking pulse signal (BLK), said selector selecting between said external horizontal rate pulse signal and said deflection derived blanking pulse signal in response to a control signal (Vhs) for producing an output signal (Cpt);
   a blanking pulse signal generator (715) for generating said deflection derived blanking pulse signal (BLK),

   **Characterized by**
   a clamp pulse generator (400) for generating a clamp pulse responsive to said output signal (Cpt) and including means for delaying (by t1) said clamp pulse (CP), and
   means for adjusting a duration of the clamp pulse to generate clamp pulses in accordance with said received horizontal rate pulse signal; and,
   a detector (250) coupled to receive said horizontal rate pulse signal (HS) for generating said control signal (Vhs) having a first state responsive to a presence of said horizontal rate pulse signal and a second state responsive to an absence of said horizontal rate pulse signal, wherein said first state of said control signal causes said selector (300) to select said horizontal rate pulse signal for coupling to generate said clamp pulse (CP) and wherein a transition to said second state of said control signal causes said selector to select said deflection derived blanking pulse signal for coupling to generate said clamp pulse.

2. The clamp pulse generating system of claim 1, wherein during said first state of said control signal (Vhs) said clamp pulse (CP) is generated a predetermined interval (tl) after an occurrence of said horizontal rate pulse signal (HS).

3. The clamp pulse generating system of claim 1, wherein during said second state of said control signal (Vhs) said clamp pulse is generated to occur within a pulse width of said blanking pulse signal (BLK).

4. A video display selectably operable at a plurality of synchronizing signal frequencies, comprising:

   a selector (100) for receiving at least two display signals with corresponding synchronizing components and selecting therebetween;
   an amplifier (120) coupled to receive a selected display signal from said selector for amplification to form a video drive signal (Vd);
   a cathode ray tube (900) and deflection means coupled to said amplifier for generating a raster scanned display of said selected display signal;
   **characterized by**
   a clamp pulse generator (400) coupled to said selector and said deflection means for generating a clamp pulse for coupling to said amplifier to clamp said selected display signal, said clamp pulse generator including means for delaying said clamp pulse (by t1) and means for adjusting a duration of the clamp pulse to generate clamp pulses in accordance with said selected display signal, wherein said clamp pulse generator generates said clamp pulse responsive to said corresponding synchronizing component of said selected display signal, and if said corresponding synchronizing component is absent said clamp pulse generator selects a signal from said deflection means for generating said clamp pulse (CP).

5. The video display of claim 4, additionally comprising a controller (600) coupled to said clamp pulse generator (400) and said selector (100) to control selection between corresponding synchronizing components having different scanning frequencies, said controller (600) controlling said clamp pulse generator (400) to change said clamp pulse such that a similar part of said selected display signal is clamped by said amplifier for each of said at least two display signals.

**Patentansprüche**

1. Klemmimpulserzeugungssystem, das folgendes umfaßt:

einen Wahlschalter (300), der ein externes Horizontalratenimpulssignal (+HS) und ein intern erzeugtes, von der Ablenkung abgeleitetes Austastimpulssignal (BLK) empfängt, wobei der Wahlschalter als Reaktion auf ein Steuersignal (Vhs) zwischen dem externen Horizontalratenimpulssignal und dem von der Ablenkung abgeleiteten Austastimpulssignal wählt und ein Ausgangssignal (Cpt) erzeugt;
einen Austastimpulssignalgenerator (715) zum Erzeugen des von der Ablenkung abgeleiteten Austastimpulssignals (BLK),

**gekennzeichnet durch**
einen Klemmimpulsgenerator (400) zum Erzeugen eines Klemmimpulses als Reaktion auf das Ausgangssignal (Cpt) und mit Mitteln zum Verzögern (um t1) des Klemmimpulses (CP) und
Mittel zum Einstellen einer Dauer des Klemmimpulses, um Klemmimpulse gemäß dem empfangenen Horizontalratenimpulssignal zu erzeugen; und
einen Detektor (250), der so gekoppelt ist, daß er das Horizontalratenimpulssignal (HS) empfängt, um das Steuersignal (Vhs) zu erzeugen, mit einem ersten Zustand als Reaktion auf das Vorliegen des Horizontalratenimpulssignals und einem zweiten Zustand als Reaktion auf eine Abwesenheit des Horizontalratenimpulssignals, wobei der erste Zustand des Steuersignals bewirkt, daß der Wahlschalter (300) das Horizontalratenimpulssignal zum Ankoppeln zum Erzeugen des Klemmimpulses (CP) wählt und wobei ein Übergang zum zweiten Zustand des Steuersignals bewirkt, daß der Wahlschalter das von der Ablenkung abgeleitete Austastimpulssignal zum Ankoppeln zum Erzeugen des Klemmimpulses wählt.

2. Klemmimpulserzeugungssystem nach Anspruch 1, wobei der Klemmimpuls (CP) während des ersten Zustands des Steuersignals (Vhs) eine vorbestimmte Dauer (t1) nach einem Auftreten des Horizontalratenimpulssignals (HS) erzeugt wird.

3. Klemmimpulserzeugungssystem nach Anspruch 1, wobei der Klemmimpuls während des zweiten Zustands des Steuersignals (Vhs) so erzeugt wird, daß er innerhalb einer Impulsbreite des Austastimpulssignals (BLK) auftritt.

4. Videodisplay, das wählbar mit mehreren Synchronisationssignalfrequenzen betrieben werden kann, umfassend:

einen Wahlschalter (100) zum Empfangen von mindestens zwei Displaysignalen mit entsprechenden Synchronisationskomponenten und Wahl zwischen diesen;
einen Verstärker (120), der so gekoppelt ist, daß er vom Wahlschalter ein ausgewähltes Displaysignal zur Verstärkung enthält, um ein Videotreibersignal (Vd) zu bilden;
eine Kathodenstrahlröhre (900) und Ablenkmittel, gekoppelt an den Verstärker zum Erzeugen eines rastermäßig abgetasteten Displays des ausgewählten Displaysignals; **gekennzeichnet durch**

einen Klemmimpulsgenerator (400), der an den Wahlschalter und die Ablenkmittel gekoppelt ist, um einen Klemmimpuls zum Ankoppeln an den Verstärker zum Klemmen des ausgewählten Displaysignals zu erzeugen, wobei der Klemmimpulsgenerator Mittel zum Verzögern des Klemmimpulses (um t1) und Mittel zum Einstellen einer Dauer des Klemmimpulses enthält, um Klemmimpulse gemäß dem ausgewählten Displaysignal zu erzeugen, wobei der Klemmimpulsgenerator den Klemmimpuls als Reaktion auf die entsprechende Synchronisationskomponente des ausgewählten Displaysignals erzeugt und bei Fehlen der entsprechenden Synchronisationskomponente der Klemmimpulsgenerator ein Signal von den Ablenkmitteln zum Erzeugen des Klemmimpulses (CP) wählt.

5. Videodisplay nach Anspruch 4, weiterhin mit einer Steuerung (600), die an den Klemmimpulsgenerator (400) und den Wahlschalter (100) gekoppelt ist, um die Auswahl zwischen entsprechenden Synchronisationskomponenten mit verschiedenen Scanfrequenzen zu steuern, wobei die Steuerung (600) den Klemmimpulsgenerator (400) dahingehend steuert, den Klemmimpuls so zu ändern, daß von dem Verstärker für jedes der mindestens zwei Displaysignale ein ähnlicher Teil des ausgewählten Displaysignals geklemmt wird.

## Revendications

1. Système de génération d'impulsions de verrouillage comprenant :

   un sélecteur (300) recevant un signal d'impulsion de débit horizontal externe (+HS) et un signal d'impulsion de suppression dérivé de déviation généré en interne (BLK), ledit sélecteur effectuant une sélection entre ledit signal d'impulsion de débit horizontal externe et ledit signal d'impulsion de suppression dérivé de déviation en réponse à un signal de commande (Vhs) pour produire un signal de sortie (Cpt) ;
   un générateur de signaux d'impulsion de suppression (715) pour générer ledit signal d'impulsion de suppression dérivé de déviation (BLK),

   **caractérisé par**
   un générateur d'impulsions de verrouillage (400) pour générer une impulsion de verrouillage en réponse audit signal de sortie (Cpt) et incluant des moyens pour retarder (de t1) ladite impulsion de verrouillage (CP), et
   des moyens pour ajuster une durée de l'impulsion de verrouillage pour générer des impulsions de verrouillage en fonction dudit signal d'impulsion de débit horizontal reçu ; et,
   un détecteur (250) couplé pour recevoir ledit signal d'impulsion de débit horizontal (HS) pour la génération dudit signal de commande (Vhs) présentant un premier état répondant à une présence dudit signal d'impulsion de débit horizontal et un second état répondant à une absence dudit signal d'impulsion de débit horizontal, où ledit premier état dudit signal de commande implique que ledit sélecteur (300) sélectionne ledit signal d'impulsion de débit horizontal pour couplage pour générer ladite impulsion de verrouillage (CP) et où une transition vers ledit second état dudit signal de commande implique que ledit sélecteur sélectionne ledit signal d'impulsion de suppression dérivé de déviation pour couplage pour générer ladite impulsion de verrouillage.

2. Le système de génération d'impulsions de verrouillage de la revendication 1, dans lequel, pendant ledit premier état dudit signal de commande (Vhs), ladite impulsion de verrouillage (CP) est générée à un intervalle prédéterminé (tl) après une apparition dudit signal d'impulsion de débit horizontal (HS).

3. Le système de génération d'impulsions de verrouillage de la revendication 1, dans lequel, pendant ledit second état dudit signal de commande (Vhs), ladite impulsion de verrouillage est générée pour apparaître à l'intérieur d'une largeur d'impulsion dudit signal d'impulsion de suppression (BLK).

4. Affichage vidéo utilisable de manière sélectionnable à plusieurs fréquences de signaux de synchronisation, comprenant :

   un sélecteur (100) pour recevoir au moins deux signaux d'affichage avec des composants de synchronisation correspondants et effectuer une sélection entre eux ;
   un amplificateur (120) couplé pour recevoir un signal d'affichage sélectionné par ledit sélecteur pour amplification pour former un signal de polarisation vidéo (Vd) ;
   un tube cathodique (900) et des moyens de déviation couplés audit amplificateur pour générer un affichage de la plage balayée dudit signal d'affichage sélectionné ;

   **caractérisé par**
   un générateur d'impulsions de verrouillage (400) couplé audit sélecteur et auxdits moyens de déviation pour générer une impulsion de verrouillage pour couplage audit amplificateur pour verrouiller ledit signal d'affichage sélectionné, ledit générateur d'impulsions de verrouillage incluant des moyens pour retarder ladite impulsion de verrouillage (de t1) et des moyens pour ajuster une durée de l'impulsion de verrouillage pour générer des impulsions de verrouillage en fonction dudit signal d'affichage sélectionné, où ledit générateur d'impulsions de verrouillage génère ladite impulsion de verrouillage répondant audit composant de synchronisation correspondant dudit signal d'affichage sélectionné, et si ledit composant de synchronisation correspondant est absent, ledit générateur d'impulsions de verrouillage sélectionne un signal à partir desdits moyens de déviation pour générer ladite impulsion de verrouillage (CP).

5. L'affichage vidéo de la revendication 4, comprenant en outre un contrôleur (600) couplé audit générateur d'impulsions de verrouillage (400) et audit sélecteur (100) pour contrôler la sélection entre des composants de synchronisation correspondants ayant des fréquences de balayage différentes, ledit contrôleur (600) contrôlant ledit générateur d'impulsions de synchronisation (400) pour modifier ladite impulsion de verrouillage de sorte qu'une portion similaire dudit signal d'affichage sélectionné soit verrouillée par ledit amplificateur pour chacun desdits au moins deux signaux d'affichage.

FIG. 1A

FIG. 1B

FIG. 1C